(19) Europäisches Patentamt
European Patent Office
Office européen des brevets

(11) **EP 3 129 648 B1**

(12) **EUROPÄISCHE PATENTSCHRIFT**

(45) Veröffentlichungstag und Bekanntmachung des Hinweises auf die Patenterteilung:
**29.03.2023 Patentblatt 2023/13**

(21) Anmeldenummer: **15714468.4**

(22) Anmeldetag: **31.03.2015**

(51) Internationale Patentklassifikation (IPC):
**F03D 9/25** (2016.01) **F03D 7/02** (2006.01)

(52) Gemeinsame Patentklassifikation (CPC):
**F03D 7/0276; F03D 7/028; F03D 9/257;**
F05B 2240/2211; F05B 2270/1033; F05B 2270/303;
F05B 2270/32; F05B 2270/325; Y02E 10/72;
Y02E 10/76

(86) Internationale Anmeldenummer:
**PCT/EP2015/057122**

(87) Internationale Veröffentlichungsnummer:
**WO 2015/155080 (15.10.2015 Gazette 2015/41)**

(54) **VERFAHREN ZUM EINSPEISEN ELEKTRISCHER ENERGIE MITTELS EINER WINDENERGIEANLAGE**

METHOD FOR FEEDING IN ELECTRICAL ENERGY BY MEANS OF A WIND TURBINE

PROCÉDÉ D'ALIMENTATION D'ÉNERGIE ÉLECTRIQUE AU MOYEN D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2014 DE 102014206884**

(43) Veröffentlichungstag der Anmeldung:
**15.02.2017 Patentblatt 2017/07**

(73) Patentinhaber: **Wobben Properties GmbH**
**26607 Aurich (DE)**

(72) Erfinder: **DE BOER, Wolfgang**
**26802 Moormerland (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 2 700 815**     **EP-A2- 1 918 581**
**EP-A2- 2 762 720**     **DE-A1- 19 844 258**
**DE-A1-102011 003 974**     **US-A1- 2009 289 461**
**US-A1- 2011 198 846**

**Beschreibung**

Die vorliegende Erfindung betrifft ein Verfahren zum Einspeisen elektrischer Energie in ein elektrisches Versorgungsnetz, das auch ein lokal abgegrenztes Inselnetz sein kann, mittels einer Windenergieanlage. Außerdem betrifft die vorliegende Erfindung eine Windenergieanlage zum Ausführen eines solchen Verfahrens und die vorliegende Erfindung betrifft einen Windpark bestehend aus mehreren Windenergieanlagen.

Windenergieanlagen sind bekannt und sie werden üblicherweise dazu verwendet, elektrische Energie aus Wind zu erzeugen und in ein elektrisches Versorgungsnetz einzuspeisen. Problematisch bei solchen Verfahren bzw. dazu verwendeten Windenergieanlagen können ungünstige Umgebungsbedingungen sein. Eine Umgebungsbedingung ist bspw. der vorherrschende Wind. Windenergieanlagen sind grundsätzlich an die jeweiligen Windbedingungen durch ihre Steuerung anpassbar und Windenergieanlagen sind außerdem üblicherweise für spezielle Windklasse ausgelegt, also bspw. Schwachwindstandorte oder Starkwindstandorte. Wird der Wind ausnahmsweise so stark, dass er die Windenergieanlage gefährden kann, müssen Maßnahmen zum Schutz der Windenergieanlage getroffen werden. Ein Beispiel einer solchen Sturmberücksichtigung ist in dem europäischen Patent EP 0 847 496 beschrieben. Dort ist bereits vorgeschlagen worden, die Windenergieanlage bei zu starkem Wind mit weiter steigendem Wind in ihrem Betrieb zu verringern.

Es sind auch Verfahren bekannt, die sich mit einem Eisansatz an Rotorblättern beschäftigen und bspw. die Beheizung eines Rotorblattes zum Enteisen vorschlagen, wie bspw. das Dokument EP 0 842 360.

Aus der EP 1 918 581 A2 ist ein Verfahren zum Betreiben einer Windenergieanlage bekannt. Die Windenergieanlage weist einen Temperatursensor auf, der die Umgebungstemperatur erfasst. Die Energieanlage wird in Abhängigkeit von der ersten Umgebungstemperatur gesteuert.

Ganz andere Probleme können aber auftreten, wenn besonders feuchte oder trockene Bedingungen oder besonders warme oder besonders kalte Bedingungen auftreten. Oftmals ist es ratsam, die Windenergieanlage für diese konkreten Standorte auszulegen. So betreibt der Windenergieanlagenhersteller ENERCON bspw. eine Windenergieanlage in der Antarktis, die gänzlich anderen Bedingungen ausgesetzt ist, als bspw. eine Windenergieanlage in Spanien. Sehr niedrige Temperaturen können ganz verschiedene Eigenschaften der Windenergieanlage beeinflussen. Bspw. können für die Windenergieanlage höhere Lasten durch höhere Dichte der Luft auftreten. Dies macht sich insbesondere an den Rotorblättern bemerkbar, und kann indirekt dadurch oder auch unmittelbar am Turm zu spüren sein. Auch höhere Kerbschlagzähigkeit der Gussmaterialen kann ein Ergebnis besonders tiefer Temperaturen sein. Tiefe Temperaturen beeinflussen auch die Viskosität von Schmiermitteln, die dadurch insbesondere zähflüssiger werden, was die Schmierfähigkeit beeinflusst, ggf. im Extremfall sogar verhindert. Auch Faserverbundwerkstoffe können vor niedrigen Temperaturen beeinflusst werden und bspw. spröde werden.

Die speziellen Materialien für sehr niedrige Temperaturen auszulegen, kann sehr kostenaufwendig sein und kann regelmäßig auch zu einer sehr individuellen Lösung führen, für die dadurch häufig keine oder nur geringe Erfahrungswerte vorliegen. Zudem gibt es zwar kalte und warme Standorte, gleichwohl sind die Temperaturen an einem Standort nicht immer gleich kalt oder gleich warm. Bekanntlich gibt es Standorte, insbesondere kontinentale Standorte, mit sehr hohen Temperaturschwankungen. Diese Temperaturschwankungen können sowohl über das Jahr verteilt, als auch über den Tag verteilt auftreten bzw. sich im Tag-Nacht-Wechsel erheblich bemerkbar machen.

Das Deutsche Patent- und Markenamt hat in der Prioritätsanmeldung zu vorliegender Anmeldung folgenden Stand der Technik recherchiert: DE 10 2011 003 974 A1, US 2013/0101413 A1 und EP 2 535 567 A2.

Der vorliegenden Erfindung liegt somit die Aufgabe zugrunde, zumindest eines der o.g. Probleme zu adressieren. Insbesondere soll eine Lösung vorgeschlagen werden, die auch für sehr tiefe Temperaturen geeignet ist, insbesondere bei sehr tiefen Temperaturen Schäden für die Windenergieanlage vermeidet. Zumindest soll gegenüber bekannten Lösungen eine alternative Lösung geschaffen werden.

Erfindungsgemäß wird ein Verfahren gemäß Anspruch 1 vorgeschlagen. Dieses ist auf eine Windenergieanlage gerichtet, die mit einem Verfahren zum Einspeisen elektrischer Energie in ein elektrisches Versorgungsnetz betrieben wird. Die Windenergieanlage weist einen aerodynamischen Rotor und einen Generator auf, die aus Wind mit einer veränderlichen Windgeschwindigkeit elektrische Leistung erzeugen. Diese wird möglichst in das elektrische Versorgungsnetz eingespeist. Allerdings ist es zweckmäßig, einen Teil dieser Leistung für elektrische Einrichtungen der Windenergieanlage zu verwenden, also von der erzeugten Leistung einen Teil zum Eigenverbrauch abzuzweigen. Im Extremfall, der unten noch beschrieben wird, kann es zweckmäßig sein, von der erzeugten elektrischen Leistung nichts in das Netz einzuspeisen und die erzeugte Leistung vollständig für den Eigenbedarf zu verwenden.

Es wird nun vorgeschlagen, dass die erzeugte elektrische Leistung, nämlich erzeugte elektrische Wirkleistung P in Abhängigkeit einer Umgebungstemperatur eingestellt wird. Die erzeugte elektrische Leistung richtet sich an erster Stelle, jedenfalls in einem stationären oder quasi stationären Betrieb nach dem Wind, der im Grunde die maximale Leistung festlegt. Die erzeugte Leistung kann davon ausgehend aber reduziert werden.

Eine solche Reduzierung wird nun abhängig von der Temperatur, nämlich einer Umgebungstemperatur, die insbesondere als Außentemperatur, also außerhalb der Windenergieanlage, erfasst wird, eingestellt. Erfindungsgemäß wird die erzeugte elektrische Leistung ab Erreichen einer ersten Grenztemperatur mit weiter fallender Temperatur verringert. Diese Verringerung kann vorzugsweise mit weiter fallender Temperatur linear verringert werden. Es ergibt sich also in einem Temperatur-Leistungsdiagramm für diesen Abschnitt eine Gerade.

Es wurde hierbei erkannt, dass auch bei einem sehr kalten Standort, der nicht immer sehr kalt sein muss, eine Windenergieanlage betrieben werden kann, die zumindest in vielen Elementen einer Windenergieanlage entsprechen kann, die nicht für besonders kalte Bereiche ausgelegt ist. Zumindest kann das vorgeschlagene Verfahren zum Betreiben der Windenergieanlage Notwendigkeiten für eine sehr spezielle apparative Anpassung der Windenergieanlage an einen sehr kalten Standort verringern. Natürlich kann auch trotz Anwendung des vorgeschlagenen Verfahrens eine temperaturspezifische Anpassung vorgenommen werden, insbesondere spezielle Materialen verwendet werden. Vorzugsweise werden besonders Faserverbundwerkstoffe für solche extrem niedrigen Temperaturen ausgelegt, getestet und möglichst auch noch zertifiziert, damit der Anlagenbetreiber Sicherheit über diese Komponenten seiner Anlage hat.

Es wurde aber erkannt, dass durch ein Reduzieren der erzeugten Leistung die Belastung der Windenergieanlage reduziert wird, wodurch Bauteile der Windenergieanlage, die der Kälte ausgesetzt sind, dadurch zumindestens weniger belastet werden. Etwas vereinfacht ausgedrückt, berücksichtigt die Reduzierung der erzeugten Leistung bei besonders tiefen Temperaturen eine geschwächte Haltbarkeit, geschwächte Widerstandsfähigkeit oder ähnliche Temperaturauswirkung der entsprechenden Bauteile.

Außerdem oder alternativ wird vorgeschlagen, die Drehzahl, sofern denn ein Rotor mit variabler Drehzahl vorliegt, in Abhängigkeit der Umgebungstemperatur einzustellen. Auch hier wird vorgeschlagen, die Drehzahl ab einer ersten Grenztemperatur mit weiter fallender Temperatur zu verringern. Auch hier wird als eine Ausführungsform vorgeschlagen, mit weiter fallender Temperatur eine lineare Verringerung vorzusehen. Die erste Grenztemperatur zur Leistungsreduzierung und die erste Grenztemperatur der Drehzahlreduzierung können dieselben Grenzen sein bzw. dieselben Werte aufweisen, sodass also insbesondere ab der ersten Grenztemperatur Drehzahl und Leistung zugleich reduziert werden können. Es werden aber auch Ausführungsformen vorgeschlagen, bei denen die erste Grenztemperatur für die Leistungsreduzierung einerseits und für die Drehzahlreduzierung andererseits unterschiedlich sind.

Besonders die Reduzierung der Drehzahl bei besonders tiefen Temperaturen und insbesondere weitere Reduzierung bei weiter abfallender Temperatur berücksichtigt Effekte der Schmierung. Fallen die Temperaturen in sehr tiefe Werte, werden die Schmiermittel besonders zäh, weisen also eine höhere Viskosität auf, und können dann nicht mehr so gut wie vorher schmieren. Damit muss nicht unbedingt gleich die Anlage angehalten werden, sondern es wurde erkannt, dass eine Reduzierung der Drehzahl ausreichend sein kann, die veränderte Viskosität zu berücksichtigen.

Eine solche verringerte Drehzahl kann besonders auch dadurch erreicht werden, dass die Rotorblätter teilweise aus dem Wind gedreht werden. Dadurch verändert sich auch die Belastung, die der Wind auf diese Blätter hat. Diese Windbelastung kann gerade bei tiefen Temperaturen aufgrund der höheren Dichte der Luft besonders stark sein. Durch das teilweise Herausdrehen der Rotorblätter aus dem Wind wird diesem Problem in mehrerlei Hinsicht Rechnung getragen. Zum Einen verringert sich die Angriffsfläche der Rotorblätter und zum Anderen auch der Angriffswinkel, was ebenfalls die Belastung reduziert. Auch die Reduzierung der Drehzahl reduziert hier unmittelbar die Belastung des Rotors.

Vorzugsweise wird somit vorgeschlagen, die Drehzahl und/oder die erzeugte Leistung durch Verstellen der Rotorblätter zu verringern.

Erfindungsgemäß wird vorgeschlagen, dass die Windenergieanlage bei Erreichen einer zweiten Grenztemperatur, die geringer als die erste Grenztemperatur ist, abgeschaltet wird. Dies ist eine Sicherheitsmaßnahme, die somit erst für das Erreichen dieser sehr tiefen zweiten Grenztemperatur vorgeschlagen wird. Dabei kann die erste Grenztemperatur bspw. einen Wert von -30°Grad Celsius aufweisen und die zweite Grenztemperatur einen Wert von -40°Grad Celsius.

Alternativ wird erfindungsgemäß vorgeschlagen, dass das vollständige Abschalten der Windenergieanlage vermieden wird und sie mit möglichst geringer Leistung und außerdem oder alternativ mit möglichst geringer Drehzahl betrieben wird. Eine möglichst geringe Leistung ist dabei eine solche, die gerade zum Versorgen der elektrischen Einrichtungen oder zumindest der wichtigsten elektrischen Einrichtungen benötigt wird. Der Betrieb der Windenergieanlage kann hierauf ausgerichtet werden und ein solcher Betrieb bewegt sich regelmäßig im Bereich von nur noch etwa 10 % der Nennleistung oder weniger. Ähnlich kann auch die Drehzahl sich etwa im Bereich von 10 % der Nenndrehzahl bewegen. Die Anlage wird also etwas über einem Leerlaufbetrieb betrieben.

Dieser Vorschlag trägt auch einer Problematik Rechnung, die besonders für eine Windenergieanlage in der Antarktis relevant wäre, aber auch an anderen abgelegen Standorten relevant sein kann, nämlich dass ein sog. Inselnetz vorliegt, also ein Netz das sehr klein und autark ist. Im Extremfall ist die Windenergieanlage der einzige Erzeuger dieses Inselnetzes oder es ist ggf. noch ein Dieselgenerator oder ein ähnlicher Erzeuger für den Notfall vorgesehen, oder es ist ein elektrischer Speicher vorhanden, der eine entsprechende Energie bereit stellen kann. In einer solchen Situation erreicht die vorgeschlagene Variante, dass die Windenergieanlage ihren Betrieb möglichst autark aufrechterhalten und besonders auch ohne viel Aufwand wieder hochfahren oder zumindest teilweise hochfahren kann, wenn die Temperatur sich wieder etwas erhöht. Besonders in kontinentalen Bereichen, in denen eine starke Schwankung zwischen Tag und Nacht vorliegt, können die ganz extremen tiefen Temperaturen, also insbesondere die Temperatur im Bereich der zweiten Grenztemperatur, nur kurz, wie bspw. über wenige Stunden, auftreten.

Die Windenergieanlage kann dann also Anlaufen, ohne Strom aus dem Netz (elektrischen Versorgungsnetz) beziehen zu müssen. Solcher Strom kann sehr teuer sein oder bei kleinen Inselnetzen möglicherweise nicht vorhanden oder nur sehr schwer beschaffbar sein. Bspw. müsste in einem Inselnetz ggf. erst ein Dieselgenerator in Betrieb genommen werden, um danach die Windenergieanlage hochfahren zu können.

All dies wird dadurch vermieden, wenn die Windenergieanlage mit geringer Leistung für ihren Eigengebrauch weiter betrieben wird.

Vorzugsweise wird ein Teil der erzeugten Leistung oder ggf. die gesamte erzeugte Leistung verwendet zum Beheizen von Rotorblättern des Rotors, zum Beheizen des Generators, zum Beheizen wenigstens eines Tröpfchenabscheiders zum Lufttrocknen, zum Beheizen wenigstens einer Messeinrichtung, zum Beheizen wenigstens einer Steuereinrichtung und/oder zum Beheizen wenigstens eines Innenraums der Windenergieanlage, insbesondere zum Beheizen eines Gondelinnenraums oder eines Turminnenraums. Das Beheizen kann auch temperaturabhängig vorgenommen werden und ist regelmäßig bei den Rotorblättern nur bei Temperaturen um den Gefrierpunkt erforderlich, weil üblicherweise nur dann Eisansatz auftritt, der vorteilhafterweise verhindert werden kann.

Das Beheizen des Generators soll besonders das Ansetzen von Feuchtigkeit verhindern, das bei niedrigen Außentemperaturen auftreten kann. Aus demselben Grund werden Tröpfchenabscheider vorgesehen, die zur Trocknung von Innenräumen dienen können, insbesondere eine erste Entfeuchtung einströmender feuchter Luft vornehmen können. Durch das Anfrieren von Wasser kann die Funktionsfähigkeit solcher Tröpfchenabscheider beeinträchtigt werden, sodass bei entsprechend tiefen Temperaturen ihr Beheizen vorgeschlagen wird. Auch Messeinrichtungen, insbesondere ein Windgeschwindigkeitsmessgerät, können bei entsprechend tiefen Temperaturen beheizt werden, um deren Funktionsfähigkeit und damit die Steuerfähigkeit der Windenergieanlage zu erhalten.

Auch das Beheizen einer Steuereinrichtung dient vornehmlich dazu, einen Feuchtigkeitsansatz zu vermeiden. Zu dem Beheizen einer Steuereinrichtung gehört insbesondere auch das Beheizen wenigstens eines Schaltschranks. Insbesondere im Nennbetrieb kann ein solcher Schaltschrank aufgrund der fließenden Ströme selbst Wärme erzeugen. In einem stark gedrosselten Betrieb, oder wenn nur sehr wenig Wind vorhanden ist, kann eine solche eigene Heizleistung aber zu gering sein oder nur einen lokal begrenzten Teil des Schaltschranks betreffen. Zum Ausschließen von Kondensatbildung kann es daher besonders bei sehr niedrigen Außentemperaturen vorteilhaft sein, einen Schaltschrank oder andere Steuereinrichtung zu beheizen.

Das Beheizen von Innenräumen, insbesondere der Gondel und/oder des Turms kann auch dort Feuchtigkeitsbildung, also insbesondere Kondensatbildung vermeiden und führt zudem zu einer entsprechend trockenen und vorgewärmten Luft, die dann auch vorteilhaft auf die anderen vorgenannten Elemente wirkt und dort das Beheizen ggf. vereinfachen kann. Das Beheizen solcher Innenräume kann dann wie ein Vorheizen wirken.

Wenn die Windenergieanlage mit nur sehr wenig Leistung betrieben wird, also nur soviel Leistung erzeugt, wie zum eigenen Betrieb erforderlich ist, wird diese Leistung auch zum Beheizen verwendet, zumindest zum Beheizen einiger der vorgenannt erläuterten Bereiche. Diese Leistung kann aber auch für weitere Funktionen mit verwendet werden, nämlich besonders auch für das Bereitstellen eines Erregerstroms für den Generator, wenn ein fremderregter Synchrongenerator verwendet wird, also ein Synchrongenerator der keinen Permanentmagneten einsetzt.

Besonders wird somit vorgeschlagen, die Windenergieanlage so zu betreiben, dass der Generator Strom erzeugt, der zum Beheizen der Anlage zumindest wichtiger elektrischer Einrichtungen der Windenergieanlage verwendet wird.

Vorzugsweise wird die erzeugte Leistung und/oder die Drehzahl abhängig der Windgeschwindigkeit eingestellt, insbesondere wird ab Erreichen einer ersten Grenzwindgeschwindigkeit die erzeugte Leistung und/oder die Drehzahl mit weiter steigender Windgeschwindigkeit verringert. Insbesondere wird mit weiter steigender Windgeschwindigkeit linear verringert, insbesondere bis zum Erreichen einer zweiten noch höheren Grenzwertgeschwindigkeit. Es wird also insbesondere für einen sog. Sturmbereich vorgeschlagen, die erzeugte Leistung und/oder die Drehzahl zu reduzieren und dies wird insoweit mit der Einstellung, besonders Reduzierung der Leistung in Abhängigkeit der Außentemperatur kombiniert. Es wurde nämlich erkannt, dass diese Parameter bei der Belastung der Windenergieanlage zusammenwirken können bzw. sich hinsichtlich ihrer Wirkung auf die Windenergieanlage gegenseitig beeinflussen können. Es wird hier eine gemeinsame Berücksichtigung vorgeschlagen.

Bspw. erfolgt die Kombination derart, dass die Leistung und/oder Drehzahl verringert wird, sobald die Temperatur abfallenderweise die erste Grenztemperatur erreicht bzw. unterschritten hat oder die Windgeschwindigkeit steigenderweise den ersten Grenzwindgeschwindigkeitswert erreicht oder überschritten hat. Die Reduzierung erfolgt also wenn eines dieser Kriterien erfüllt ist. Sind beide Kriterien erfüllt, wird diejenige Reduzierung der Drehzahl und/oder Leistung vorgenommen, die bei den beiden Kriterien jeweils die größere Reduzierung bzw. stärkere Reduzierung darstellt.

Gemäß einer Ausführungsform wird vorgeschlagen, dass die erste und/oder zweite Grenztemperatur abhängig von der vorherrschenden Windgeschwindigkeit eingestellt wird, insbesondere abhängig von einem 10 Minuten Mittelwert der Windgeschwindigkeit. Dies erfolgt insbesondere so, dass die erste bzw. zweite Grenztemperatur mit höherer Windgeschwindigkeit umso höher eingestellt wird. Herrscht also eine besonders hohe Windgeschwindigkeit vor, soll die temperaturabhängige Leistungsreduzierung eher, also bei höheren Temperaturen einsetzen, als wenn die vorherrschende Windgeschwindigkeit geringer ist.

Vorzugsweise wird vorgeschlagen, dass die erste und/oder zweite Grenzwindgeschwindigkeit abhängig der Umgebungstemperatur eingestellt wird. Hier wird vorgeschlagen, dass die erste bzw. zweite Grenzwindgeschwindigkeit umso kleiner eingestellt wird, je geringer die Umgebungstemperatur ist. Liegen also besonders niedrige Temperaturen vor, setzt eine windgeschwindigkeitsabhängige Leistungsreduzierung eher ein. Hierdurch kann berücksichtigt werden, dass bei niedrigen Temperaturen die Anlage weniger belastbar ist, bspw. in mechanischen Elementen brüchiger sein kann. Dadurch wird die Leistungs- und/oder Drehzahlreduzierung bei hohem Wind früher durchgeführt und somit das Belastungsniveau der Windenergieanlage regelungstechnisch abgesenkt.

Durch die Veränderung der ersten und zweiten Grenztemperatur kann besonders auch bei einem linearen Verlauf dieser Verlauf zwischen diesen beiden Grenztemperaturen verändert werden. Die beiden Grenztemperaturen zusammen mit den entsprechenden Leistungs- und/oder Drehzahlwerten können somit einen geraden Streckenabschnitt der Kennlinie definieren und damit entsprechend ändern. Sinngemäß kann auch ein Verlauf der windgeschwindigkeitsabhängigen Drehzahlreduzierung bzw. Leistungsreduzierung durch Verändern der ersten bzw. zweiten Grenzwindgeschwindigkeit vorgenommen werden.

Ein Verändern der ersten und zweiten Grenztemperatur in Abhängigkeit der Windgeschwindigkeit kann besonders bei Tag-Nacht-zyklischen Temperaturveränderungen sinnvoll sein, wenn sich also die Temperatur schnell verändert.

Eine temperaturabhängige Veränderung der Grenzwindgeschwindigkeiten, also quasi der umgekehrte Fall, kann besonders bei jahreszeitlich bedingten Temperaturänderungen sinnvoll sein. Mit anderen Worten stellt sich die Windenergieanlage auf Sommer oder Winter ein und sieht entsprechend im Winter eine frühere windgeschwindigkeitsabhängige Drehzahl- bzw. Leistungsreduzierung vor, die im Sommer später, also bei höheren Windgeschwindigkeiten erst einsetzen kann.

Diese veranschaulichte Unterteilung in Sommer und Winter ist eine sehr grobe aber mögliche Unterteilung. So kann bspw. generell in einem Winterbetrieb eine windgeschwindigkeitsabhängige Drehzahlreduzierung bzw. Leistungsreduzierung vorgesehen sein, die früher ansetzt, als bei einer Drehzahlreduzierung bzw. Leistungsreduzierung in einem Sommerbetrieb. Eine Unterscheidung in Sommerbetrieb und Winterbetrieb ist somit ein Vorschlag. Vorzugsweise können solche Grenzwertverschiebungen aber kontinuierlich oder zumindest in kleineren Schritten vorgesehen sein.

Eine weitere Ausführungsform schlägt vor, dass die Windenergieanlage zum Einspeisen von Blindleistung vorbereitet ist und das Einspeisen der Blindleistung abhängig der Umgebungstemperatur und/oder abhängig der Windgeschwindigkeit vorgenommen wird. Vorzugsweise wird die Blindleistung ab Erreichen der ersten Grenztemperatur mit weiter fallender Temperatur verringert, insbesondere linear. Außerdem oder alternativ wird sie ab Erreichen der ersten Grenzwindgeschwindigkeit mit weiter steigender Windgeschwindigkeit verringert, insbesondere linear.

Die Einspeisung von Blindleistung ist als Dienstleistung der Windenergieanlage für das Netz zu verstehen. Blindleistung kann grundsätzlich auch ohne Leistungserzeugung, also ohne Erzeugung von Wirkleistung durch die Windenergieanlage, eingespeist werden, wenn die Windenergieanlage in einem Modus arbeitet, in dem sie in einem Phasenschieberbetrieb ist, also Strom aus dem Netz entnimmt und mit geändertem Phasenwinkel wieder einspeist. Mit anderen Worten, ist die Blindleistung nicht unmittelbar an die erzeugte Wirkleistung gekoppelt. Es wurde aber erkannt, dass besonders für einige elektrische Steuereinrichtungen, insbesondere Wechselrichter, und auch für elektrische Leitungen, deren Belastung von dem erzeugten umgesetzten bzw. geführten Strom abhängen kann. Somit wird vorgeschlagen, auch die Blindleistung bei einer Anlagenbelastung durch niedrige Temperaturen und/oder starken Wind zu verringern. Zudem wurde erkannt, dass es besser ist, eine verringerte Blindleistung ins Netz einzuspeisen, als gar keine Blindleistung ins Netz einzuspeisen. Auch dies kann besser durch die vorgeschlagene Reduzierung der Blindleistung zum Anlagenschutz erreicht werden, nämlich anstatt den Betrieb der Anlage komplett einzustellen.

Erfindungsgemäß wird auch eine Windenergieanlage vorgeschlagen, die gemäß wenigstens einer der vorstehenden Ausführungsformen des Verfahrens zum Einspeisen elektrischer Energie in ein elektrisches Versorgungsnetz betrieben wird. Vorzugsweise weist eine solche Windenergieanlage zum Trocknen bzw. Trockenhalten von Innenluft wenigstens einen beheizbaren Tröpfchenabscheider auf. Dieser beheizbare Tröpfchenabscheider ist somit auch für sehr niedrige Umgebungstemperaturen geeignet und kann wie beschrieben besonders dann zum Trocknen oder Trockenhalten der Innenluft eingesetzt werden.

Vorzugsweise umfasst die Windenergieanlage Schaltschränke, die beheizt sind. Auch diese Besonderheit verbessert die Betriebsfähigkeit einer Windenergieanlage in besonders kalten Gebieten bzw. besonders kalten Umgebungsbedingungen. Vorzugsweise werden die Schaltschränke und/oder die Tröpfchenabscheider beheizt, sobald eine Innentemperatur oder Umgebungstemperatur unter eine Auslösetemperatur zum Auslösen der Beheizung fällt. Es braucht also keine dauerhafte Beheizung dieser Elemente vorgenommen zu werden, sondern dies kann bedarfsabhängig erfolgen. Die Außentemperatur ist dafür ein wichtiger Indikator. Die Innentemperatur kann zudem berücksichtigen, inwieweit bspw. der Anlagenbetrieb als solcher bereits zu einer gewissen Erwärmung geführt hat.

Weiterhin wird ein Windpark vorgeschlagen, der mehrere Windenergieanlagen gemäß zumindest einer der oben beschriebenen Ausführungsformen aufweist. Entsprechend kann ein Windpark geschaffen werden, der in kalten Regionen einsetzbar ist und dort eine Versorgung sicherstellen kann. Vorzugsweise speist dieser über einen gemeinsamen Netzeinspeisepunkt in das elektrische Versorgungsnetz ein und wird vorzugsweise über eine zentrale Parksteuerung gesteuert. Die zentrale Parksteuerung kann ein Teil der zuvor für den Betrieb einer einzelnen Windenergieanlage beschriebenen Verfahrensschritte ausführen. Vorzugsweise steuert jede Windenergieanlage sich selbst, die übergeordnete Steuerung kann aber insbesondere Zielwerte vorgeben, wie bspw. die zu erzeugende Leistung, die einzuspeisende Blindleistung und sogar die jeweils einzustellende Drehzahl der Windenergieanlagen. Hierdurch kann besonders auch die Parksteuerung etwaige Anforderungen eines Netzbetreibers mit einfließen lassen und ggf. entscheiden, ob im Rahmen von zumindest kurzzeitigen Toleranzen doch eine höhere Leistung oder höhere Drehzahl eingestellt werden kann, als für einen optimalen Belastungsschutz wünschenswert wäre. Hierbei ist zu beachten, dass zu hohe Belastungen, wenn sie im Rahmen sind, nicht sofort eine Anlage zerstören, sondern erst über längere Zeit nachteilige Auswirkungen haben können. Eins kurzfristige Überhöhung kann also akzeptabel sein.

Vorzugsweise kann eine gemeinsame Parksteuerung einige Daten gemeinsam erfassen. Hierzu gehören besonders die Erfassung der Umgebungstemperatur und der vorherrschenden Windgeschwindigkeit. Selbst wenn jede Anlage eine autonome Steuerung durchführt, können aber einige Randbedingungen, besonders die beschriebenen Drehzahl- und Leistungsreduzierungen, zentral vorgegeben werden, wodurch besonders Schwingungsproblemen vorgebeugt werden kann. Besonders bei der Berücksichtigung von Windgeschwindigkeiten ist zu beachten, dass sich hintereinander stehende Windenergieanlagen beeinflussen können.

Die Erfindung wird nun nachfolgend anhand von Ausführungsbeispielen exemplarisch unter Bezugnahme auf die begleitenden Figuren näher erläutert.

Figur 1   zeigt eine Windenergieanlage in einer perspektivischen Darstellung.

Figur 2   zeigt schematisch einen Windpark.

Figur 3   zeigt eine temperaturabhängige Leistungskennlinie, die das temperaturabhängige Reduzieren der erzeugten Leistung gemäß einer Ausführungsform verdeutlicht.

Figur 4   zeigt eine windgeschwindigkeitsabhängige Leistungskennlinie mit einer temperaturabhängigen Variationsmöglichkeit.

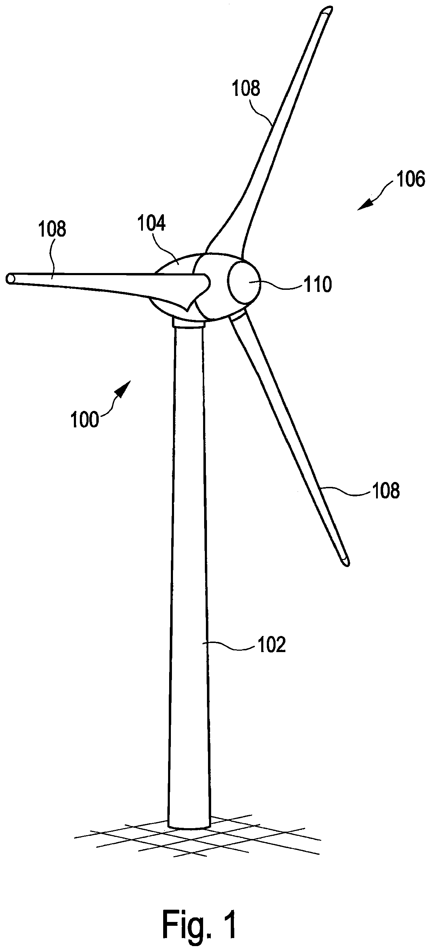

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

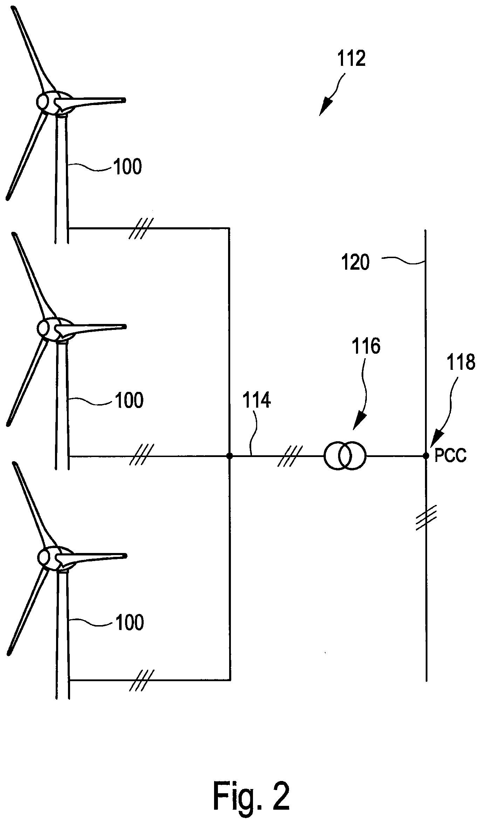

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

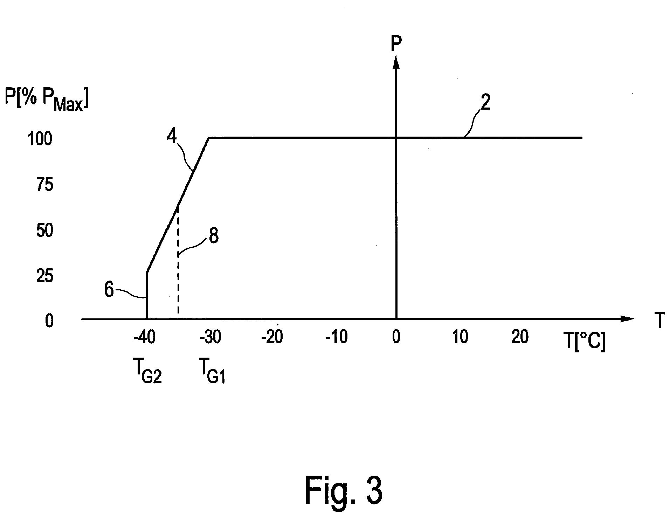

Figur 3 zeigt eine Leistungskennlinie in Abhängigkeit der Temperatur. Dort ist, insbesondere als Sollwert für die Steuerung einer Windenergieanlage, die Wirkleistung P in Abhängigkeit der Temperatur T aufgetragen. Für den Temperaturbereich ab bzw. oberhalb der ersten Grenztemperatur $T_{G1}$ zeigt die Kennlinie einen waagerechten Bereich 2, dem der Wert 100 % zugeordnet ist. Diese 100 % beziehen sich auf die in dem Moment maximal erzeugbare Leistung $P_{Max}$. Wenn ausreichend und nicht zu starker Wind vorliegt, kann dies der Nennleistung $P_N$ entsprechen.

Die Kennlinie zeigt nun, dass für tiefere Temperaturen ab der ersten Grenztemperatur $T_{G1}$ die erzeugte Leistung mit weiter fallender Temperatur linear abfällt. Dieser linear abfallende Bereich ist als Kennlinienabschnitt 4 dargestellt. Dieser linear abfallende Bereich 4 reicht bis zur zweiten Grenztemperatur $T_{G2}$. Ist diese zweite Grenztemperatur erreicht, wird die erzeugte Leistung P auf 0 abgesenkt. Dies veranschaulicht der senkrechte Abschnitt 6. Dies kann auch bedeuten, dass die Windenergieanlage ohne Leistungserzeugung oder zumindest ohne Leistungseinspeisung weiter betrieben wird.

Der alternative Kennlinienabschnitt 8, der gestrichelt gezeigt ist, veranschaulicht, dass alternativ ein vollständiges Absenken der Leistung auch früher erfolgen kann, dass also die zweite Grenztemperatur $T_{G2}$ auch verschoben werden kann.

Dies sind Ausführungsformen und eine Alternative sieht vor, dass die Leistung P ab der ersten Grenztemperatur $T_{G1}$ mit weiter abfallender Temperatur linear so abgesenkt wird, dass sie beim Erreichen der zweiten Grenztemperatur $T_{G2}$ den Wert 0 erreicht, sodass ein senkrechter Abschnitt gemäß dem senkrechten Abschnitt 6 ausbleiben würde.

Analog zur Möglichkeit, die zweite Grenztemperatur $T_{G2}$ zu verändern, wie die Alternative 8 zeigt, kann auch die erste Grenztemperatur $T_{G1}$ verändert werden. Es können auch beide Grenztemperaturen verändert werden, um eine Anpassung an geänderte Bedingungen vornehmen zu können.

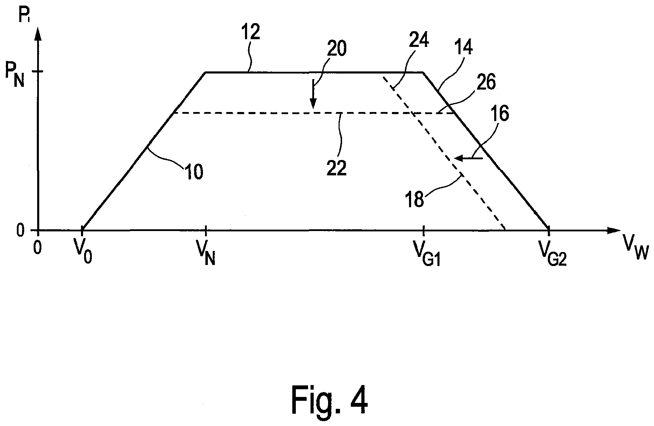

Figur 4 zeigt teilweise schematisch eine windgeschwindigkeitsabhängige Leistungskennlinie. Es ist grundsätzlich zu erkennen, dass die Leistung P bei sehr geringen Windgeschwindigkeiten $V_W$ zunächst 0 ist und ab der Anfangswindgeschwindigkeit $V_0$ mit weiter ansteigender Windgeschwindigkeit ansteigt. Entsprechend zeigt die Kennlinie einen sog. Teillastbereich 10, in dem die Leistung nämlich noch nicht ihren Nennwert $P_N$ erreicht hat, weil der Wind noch zu schwach ist.

Ab der Nennwindgeschwindigkeit $V_N$ erreicht die Leistung auch die Nennleistung $P_N$, was der waagerecht dargestellte Nennlastbereich 12 veranschaulicht.

Steigt der Wind noch weiter und erreicht die erste Grenzwindgeschwindigkeit $V_{G1}$, so wird die Leistung P dann mit weiter steigender Windgeschwindigkeit reduziert. Dies wird als Sturmbereich 14 bezeichnet. Die Leistung kann nun mit weiter ansteigender Windgeschwindigkeit bspw. linear oder anders abnehmen. Dieser Sturmbereich kann bspw. durch eine lineare Abnahme der Leistung von der ersten Grenzwindgeschwindigkeit $V_{G1}$ bis zur zweiten Grenzwindgeschwindigkeit $V_{G2}$ gestaltet sein.

Es wird nun gemäß einer Ausführungsform vorgeschlagen, diese windgeschwindigkeitsabhängige Leistungskennlinie temperaturabhängig zu verändern. Besonders bei sehr tiefen Temperaturen, was sich hier grundsätzlich auf die Umgebungstemperatur bezieht, die bspw. -30°Grad Celsius oder sogar -40°C Grad Celsius erreichen, kann vorgesehen sein, die gezeigte Leistungskurve zu reduzieren. Dafür wird gemäß einer Ausführungsform eine Grenzwindgeschwindigkeitsveränderung 16 vorgeschlagen, die in der Figur 4 als Pfeil 16 symbolisiert ist. Tatsächlich werden die beiden Grenzwindgeschwindigkeiten $V_{G1}$ und $V_{G2}$ verschoben, wodurch sich der Sturmbereich 14 zu dem gestrichelt dargestellten reduzierten Sturmbereich 18 verschiebt. Es kommt hier auch in Betracht, bspw. nur die erste Grenzwindgeschwindigkeit $V_{G1}$ oder nur die zweite Grenzwindgeschwindigkeit $V_{G2}$ oder diese unterschiedlich zu verschieben.

Eine weitere Ausführungsform schlägt vor, die Leistung temperaturabhängig insgesamt abzusenken, also eine Leistungs-Maximum-Änderung 20 vorzunehmen, die durch den nach unten gerichteten Pfeil 20 veranschaulicht ist. Es ergibt sich dann ein reduziertes Leistungsmaximum 22, das als waagerechte gestrichelte Linie dargestellt ist. Eine solche Reduzierung des Leistungsmaximums wird somit temperaturabhängig vorgeschlagen, also für sehr niedrige Temperaturen wie -30°Grad Celsius oder sogar -40°Grad Celsius und kann stückweise oder kontinuierlich mit der Temperatur vorgesehen sein. Die Leistungs-Maximum-Reduzierung und/oder die Grenzgeschwindigkeitsänderung kann temperaturabhängig im Grunde so vorgenommen werden, wie Figur 3 die Reduzierung der Leistung P darstellt, insbesondere im linear abfallenden Bereich 4 veranschaulicht. Tatsächlich lässt sich auch die Verschiebung der Grenzgeschwindigkeiten $V_{G1}$ und $V_{G2}$, also die waagerechte Verschiebung gemäß dem Pfeil 16 der Figur 4 als eine Absenkung des Sturmbereichs 14 darstellen. Und auch diese Absenkung kann wie in Figur 3 durch den linear abfallenden Bereich 4 veranschaulicht wird, vorgenommen werden.

Wird die Leistungskurve der Figur 4 insgesamt, also für den Nennlastbereich 12 und den Sturmbereich 14 vorgenommen, ergibt sich die gestrichelte aus den Abschnitten 22 und 18 zusammengesetzte Kurve, ohne die Alternativabschnitt 24 und 26.

Gemäß einer Ausführungsform kann auch der Teillastbereich 10 temperaturabhängig verändert werden. Üblicherweise ist aber die Belastung im Teillastbereich generell gering, so dass eine Reduzierung dort vorzugsweise nicht vorgenommen werden soll.

Im Übrigen veranschaulicht die Figur 4 den Zusammenhang der Leistung in Abhängigkeit der Windgeschwindigkeit und die Möglichkeit, diese Leistung temperaturabhängig zu reduzieren, besonders für sehr niedrige Temperaturen. Die Veranschaulichung und die Erläuterungen dort treffen ganz ähnlich für eine windgeschwindigkeitsabhängige Drehzahlkennlinie zu. Selbst die windgeschwindigkeitsabhängigen Eckwerte, nämlich insbesondere die Nennwindgeschwindigkeit $V_N$, die erste Grenzwindgeschwindigkeit $V_{G1}$ und die zweite Grenzwindgeschwindigkeit $V_{G2}$ können für eine solche Drehzahlkennlinie gleich sein. Natürlich ist die Amplitude der Drehzahl schon aufgrund der anderen physikalischen Einheit eine andere.

Im Übrigen kann auch, was gemäß einer Ausführungsform vorgeschlagen wird, eine temperaturabhängige Drehzahlreduzierung so vorgenommen werden, wie dies für die Leistung in Figur 3 veranschaulicht ist. Auch dort können dieselben Grenztemperaturen oder andere Grenztemperaturen verwendet werden. Besonders eine erste Grenztemperatur auf einen Wert von -30°Grad Celsius zu legen und eine zweite Grenztemperatur auf ein Wert von -40°Grad Celsius, wie Figur 3 zeigt, ist eine bevorzugte Ausgestaltung, die die Windenergieanlage in einem großen Temperaturbereich, nämlich oberhalb von den exemplarischen -30°Grad Celsius, ohne Reduzierung betreiben lässt und erst bei sehr tiefen Temperaturen eine Reduzierung zum Schutz der Anlage vorschlägt.

Gemäß einer Ausführungsform können die erste Grenzwindgeschwindigkeit $V_{G1}$ und entsprechend die zweite Grenzgeschwindigkeit $V_{G2}$ nach folgenden Formeln in Abhängigkeit der Temperatur T berechnet werden:

$$V_{G1} = V_{G1\_0}*(1+k_1*(T-T_1)/T_1)$$

$$V_{G2} = V_{G2\_0}*(1+k_2*(T-T_2)/T_2)$$

Dabei ist $T_1$ und $T_2$ die erste bzw. zweite Referenztemperatur und $V_{G1\_0}$ und $V_{G2\_0}$ der Basiswert der ersten bzw. zweiten Grenzwindgeschwindigkeit, wobei $V_{G1\_0}$ kleiner als $V_{G2\_0}$ ist. Die Faktoren $k_1$ und $k_2$ sind Gewichtungsfaktoren, die auch gleich sein können. Die Referenztemperaturen $T_1$ und $T_2$ können auch gleich sein oder sie können die erste bzw. zweite Grenztemperatur sein.

## Patentansprüche

1.  Verfahren zum Einspeisen elektrischer Energie in ein elektrisches Versorgungsnetz, mittels einer Windenergieanlage (100), wobei

    - die Windenergieanlage (100) mittels eines aerodynamischen Rotors und eines Generators aus Wind mit einer veränderlichen Windgeschwindigkeit elektrische Leistung (P) erzeugt und zumindest teilweise in das elektrische Versorgungsnetz einspeist und/oder zumindest teilweise zum Versorgen elektrischer Einrichtungen der Windenergieanlage verwendet,

    wobei

    - die erzeugte elektrische Wirkleistung (P) in Abhängigkeit einer Umgebungstemperatur (T) eingestellt wird und/oder wobei
    - der Rotor eine variable Drehzahl aufweist und die Drehzahl, in Abhängigkeit der Umgebungstemperatur (T) eingestellt wird, und wobei
    - die Drehzahl und/oder die erzeugte elektrische Wirkleistung (P) bei Unterschreiten einer ersten Grenztemperatur verringert und mit weiter fallender Temperatur immer stärker verringert wird,

    **dadurch gekennzeichnet, dass**

    die Windenergieanlage bei Erreichen einer zweiten Grenztemperatur, die geringer als die erste Grenztemperatur ist, abgeschaltet wird, oder in einem Betriebszustand betrieben wird, in dem nur so viel Leistung erzeugt wird, wie zum Versorgen der elektrischen Einrichtungen oder eines Teils davon benötigt wird und die gesamte erzeugte elektrische Leistung zum Versorgen der elektrischen Einrichtungen verwendet wird,
    wobei
    die Windenergieanlage zum Einspeisen von Blindleistung (Q) vorbereitet ist und das Einspeisen der Blindleistung abhängig der Umgebungstemperatur so steuert, dass die eingespeiste Blindleistung ab Erreichen der ersten Grenztemperatur mit weiter fallender Temperatur verringert wird.

2.  Verfahren nach einem der vorstehenden Ansprüche, **dadurch gekennzeichnet, dass** zumindest ein Teil der erzeugten Leistung verwendet wird

    - zum Beheizen von Rotorblättern des Rotors,
    - zum Beheizen des Generators,
    - zum Beheizen wenigstens eine Tröpfchenabscheiders zum Lufttrocknen,
    - zum Beheizen wenigstens einer Messeinrichtung,
    - zum Beheizen wenigstens einer Steuereinrichtung und/oder
    - zum Beheizen wenigstens eines Innenraumes der Windenergieanlage.

3.  Verfahren nach einem der vorstehenden Ansprüche, **dadurch gekennzeichnet, dass** die erzeugte Leistung und/oder die Drehzahl abhängig der Windgeschwindigkeit eingestellt wird, insbesondere, dass ab Erreichen einer ersten Grenzwindgeschwindigkeit die erzeugte Leistung und/oder die Drehzahl mit weiter steigender Windgeschwindigkeit verringert wird bis zum Erreichen einer zweiten Grenzwindgeschwindigkeit, die größer als die erste Grenzwindgeschwindigkeit ist.

4.  Verfahren nach einem der vorstehenden Ansprüche, **dadurch gekennzeichnet, dass** die erste und/oder zweite Grenztemperatur abhängig von der vorherrschenden Windgeschwindigkeit so eingestellt wird, dass die erste bzw. zweite Grenztemperatur umso höher eingestellt wird, je höher die Windgeschwindigkeit ist.

5.  Verfahren nach Anspruch 3, **dadurch gekennzeichnet, dass**

die erste und/oder zweite Grenzwindgeschwindigkeit abhängig der Umgebungstemperatur so eingestellt wird, dass die erste bzw. zweite Grenzwindgeschwindigkeit umso kleiner eingestellt wird, je geringer die Umgebungstemperatur ist.

6. Verfahren nach einem der vorstehenden Ansprüche, **dadurch gekennzeichnet, dass** die Windenergieanlage zum Einspeisen von Blindleistung (Q) vorbereitet ist und das Einspeisen der Blindleistung abhängig von Windgeschwindigkeit so steuert, dass die eingespeiste Blindleistung ab Erreichen einer bzw. der ersten Grenzwindgeschwindigkeit mit weiter steigender Windgeschwindigkeit verringert wird.

7. Windenergieanlage **dadurch gekennzeichnet, dass** die Windenergieanlage zum Ausführen eines Verfahrens gemäß einem der vorstehenden Ansprüche vorbereitet ist.

8. Windenergieanlage gemäß Anspruch 7, **dadurch gekennzeichnet, dass** die Windenergieanlage zum Trocknen bzw. Trockenhalten von Innenluft der Windenergieanlage beheizbare Tröpfchenabscheider und/oder beheizbare Schaltschränke aufweist, wobei die Tröpfchenabscheider und/oder die beheizbaren Schaltschränke beheizt werden sobald eine Innentemperatur oder Umgebungstemperatur unter eine Auslösetemperatur zum Auslösen der Beheizung abfällt.

9. Windpark **dadurch gekennzeichnet, dass** der Windpark mehrere Windenergieanlagen gemäß einem der Ansprüche 7 oder 8 umfasst.

10. Windpark nach Anspruch 9, **dadurch gekennzeichnet, dass** alle Windenergieanlagen des Windparks über einen gemeinsamen Netzeinspeisepunkt in das elektrische Versorgungsnetz einspeisen und/oder über eine zentrale Parksteuerung gesteuert werden und/oder zur Regelung dieselbe Umgebungstemperatur verwenden, und/oder zur Regelung dieselbe Windgeschwindigkeit verwenden.

11. Windpark nach Anspruch 10, **dadurch gekennzeichnet, dass** ein gemeinsamer Temperatur-Sensor, um dieselbe Umgebungstemperatur zu erfassen, und/oder ein gemeinsamer Windgeschwindigkeits-Sensor vorgesehen sind/ist, um dieselbe Windgeschwindigkeit zu erfassen.

**Claims**

1. Method for feeding electric energy into an electric power supply network by means of a wind turbine (100), wherein

- the wind turbine (100) generates electric power (P) from wind having a variable wind speed by means of an aerodynamic rotor and a generator and feeds it at least partially into the electric power supply network and/or uses it at least partially for powering electric devices of the wind turbine,

wherein

- the generated electric real power (P) is set as a function of an ambient temperature (T) and/or wherein
- the rotor has a variable rotational speed and the rotational speed, is set as a function of the ambient temperature (T), and wherein
- the rotational speed and/or the generated electric real power (P) is reduced when the temperature falls below a first limit temperature and is reduced more and more as the temperature falls further,

**characterized in that**
the wind turbine is shut down when a second limit temperature is reached, which is less than the first limit temperature, or is operated in an operating state in which only as much power is generated as is required for powering the electric devices or a portion thereof, and the total generated electric power is used for powering the electric devices,
wherein
the wind turbine is prepared to feed-in reactive power (Q) and controls the feed-in of the reactive power as a function of the ambient temperature in such a way that the feed-in reactive power is reduced after the first limit temperature has been reached as the temperature falls further.

2. Method according to one of the preceding claims, **characterized in that**
at least a portion of the generated power is used

- for heating rotor blades of the rotor,
- for heating the generator,
- for heating at least one droplet separator for drying air,
- for heating at least one measuring device,
- for heating at least one control device and/or
- for heating at least one internal space of the wind turbine.

3. Method according to one of the preceding claims, **characterized in that**
the generated power and/or the rotational speed is set as a function of the wind speed, in particular that, after reaching a first threshold wind speed, the generated power and/or the rotational speed is reduced as the wind speed increases further up to reaching a second threshold wind speed which is greater than the first threshold wind speed.

4. Method according to one of the preceding claims, **characterized in that** the first and/or second limit temperature is set as a function of the prevailing wind speed in such a way that the higher the wind speed is, the higher the first or second limit temperature is set.

5. Method according to claim 3, **characterized in that** the first and/or second threshold wind speed is set as a function of the ambient temperature in such a way that the lower the ambient temperature is, the lower the first or second threshold wind speed is set.

6. Method according to one of the preceding claims, **characterized in that** the wind turbine is prepared to feed in reactive power (Q) and controls the feed-in of the reactive power as a function of the wind speed in such a way that the fed-in reactive power is reduced after a or the first threshold wind speed is reached, as the wind speed increases further.

7. Wind turbine, **characterized in that** the wind turbine is prepared for implementing a method according to one of the preceding claims.

8. Wind turbine according to Claim 7, **characterized in that** the wind turbine has heatable droplet separators and/or heatable switch cabinets for drying internal air of the wind turbine or keeping it dry, wherein the droplet separators and/or the heatable switch cabinets are heated as soon as an internal temperature or ambient temperature falls below a trigger temperature for triggering the heating.

9. Wind farm, **characterized in that** the wind farm includes multiple wind turbines according to one of Claims 7 or 8.

10. Wind farm according to Claim 9, **characterized in that** all wind turbines of the wind farm feed into the electric power supply network via a shared network feed-in point and/or are controlled via a central wind farm controller and/or use the same ambient temperature for control, and/or use the same wind speed, for control.

11. Wind farm according to Claim 10, **characterized in that** a shared temperature sensor to detect the same ambient temperature, and/or a shared wind speed sensor is/are provided to detect the same wind speed.

## Revendications

1. Procédé pour injecter de l'énergie électrique dans un réseau d'alimentation électrique au moyen d'une éolienne (100), dans lequel

   - l'éolienne (100) produit de la puissance électrique (P) au moyen d'un rotor aérodynamique et d'un générateur à partir de vent avec une vitesse de vent changeante et l'injecte au moins en partie dans le réseau d'alimentation électrique et/ou l'utilise au moins en partie pour l'alimentation de systèmes électriques de l'éolienne,

   dans lequel

   - la puissance active électrique (P) produite est réglée en fonction d'une température ambiante (T) et/ou dans lequel
   - le rotor présente une vitesse de rotation variable et la vitesse de rotation est réglée en fonction de la température ambiante (T), et dans lequel
   - la vitesse de rotation et/ou la puissance active électrique (P) produite est réduite lors d'un passage au-dessous d'une première température limite et est encore plus réduite avec une température continuant de chuter,

   **caractérisé en ce que**

   l'éolienne est mise hors circuit lorsqu'une deuxième température limite est atteinte, qui est inférieure à la première température limite, ou fonctionne dans un état de fonctionnement dans lequel seule la puissance nécessaire pour l'alimentation des systèmes électriques ou d'une partie de ceux-ci est produite et la puissance électrique produite totale est utilisée pour l'alimentation des systèmes électriques,
   dans lequel
   l'éolienne est destinée à l'injection d'une puissance réactive (Q) et commande l'injection de la puissance réactive en fonction de la température ambiante, de sorte que la puissance réactive injectée est réduite à partir de l'atteinte de la première température limite avec une température continuant de chuter.

2. Procédé selon l'une quelconque des revendications précédentes, **caractérisé en ce que** au moins une partie de la puissance produite est utilisée

   - pour le chauffage de pales de rotor du rotor,
   - pour le chauffage du générateur,
   - pour le chauffage d'au moins un séparateur de gouttelettes pour le séchage d'air,
- pour le chauffage d'au moins un système de mesure,
- pour le chauffage d'au moins un système de commande et/ou
- pour le chauffage d'au moins un espace intérieur de l'éolienne.

3. Procédé selon l'une quelconque des revendications précédentes,
   **caractérisé en ce que**
   la puissance produite et/ou la vitesse de rotation est réglée en fonction de la vitesse de vent, en particulier, qu'à partir de l'atteinte d'une première vitesse de vent limite la puissance produite et/ou la vitesse de rotation est réduite avec une vitesse de vent continuant d'augmenter jusqu'à l'atteinte d'une deuxième vitesse de vent limite qui est supérieure à la première vitesse de vent limite.

4. Procédé selon l'une quelconque des revendications précédentes,
   **caractérisé en ce que**
   la première et/ou deuxième température limite est réglée en fonction de la vitesse de vent prédominante, de sorte que la première ou deuxième température limite est réglée pour être d'autant plus élevée que la vitesse de vent est élevée.

5. Procédé selon la revendication 3,
   **caractérisé en ce que**
   la première et/ou deuxième vitesse de vent limite est réglée en fonction de la température ambiante, de sorte que la première ou deuxième vitesse de vent limite est réglée pour être d'autant plus faible que la température ambiante est basse.

6. Procédé selon l'une quelconque des revendications précédentes,
   **caractérisé en ce que**
   l'éolienne est destinée à l'injection d'une puissance réactive (Q) et commande l'injection de la puissance réactive en fonction de la vitesse de vent, de sorte que la puissance réactive injectée est réduite à partir de l'atteinte d'une ou de la première vitesse de vent limite avec une vitesse de vent continuant d'augmenter.

7. Eolienne, **caractérisée en ce que** l'éolienne est destinée à la mise en œuvre d'un procédé selon l'une quelconque des revendications précédentes.

8. Eolienne selon la revendication 7,
   **caractérisée en ce que**
   l'éolienne présente pour le séchage ou le maintien de l'air intérieur de l'éolienne sec des séparateurs de gouttelettes chauffants et/ou armoires de commande chauffantes, dans laquelle les séparateurs de gouttelettes et/ou les armoires de commande chauffantes sont chauffés dès qu'une température intérieure ou température ambiante chute au-dessous d'une température de déclenchement pour le déclenchement du chauffage.

9. Parc éolien, **caractérisé en ce que** le parc éolien comprend plusieurs éoliennes selon l'une quelconque des revendications 7 ou 8.

10. Parc éolien selon la revendication 9, **caractérisé en ce que** toutes les éoliennes du parc éolien injectent dans le réseau d'alimentation électrique par l'intermédiaire d'un point d'injection dans le réseau commun et/ou sont commandées par l'intermédiaire d'une commande de parc centrale et/ou utilisent la même température ambiante pour la régulation, et/ou utilisent la même vitesse de vent pour la régulation.

11. Parc éolien selon la revendication 10, **caractérisé en ce qu'**un capteur de température commun, afin de détecter la même température ambiante, et/ou un capteur de vitesse commun, afin de détecter la même vitesse de vent, sont/est prévus.

Fig. 1

Fig. 2

13

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0847496 A
- EP 0842360 A
- EP 1918581 A2
- DE 102011003974 A1
- US 20130101413 A1
- EP 2535567 A2